# EUROPÄISCHE PATENTANMELDUNG

(11) **EP 4 070 644 A1**
(43) Veröffentlichungstag der Anmeldung: **12.10.2022**
(21) Anmeldenummer: 22156509.6
(22) Anmeldetag: 14.02.2022
(51) Int. Cl.: A01D 89/00

(54) **ZINKENSEGMENT MIT EINEM INNENRAUM**

(30) Priorität: 17.02.2021 DE 102021103717
(71) Anmelder: B. Strautmann & Söhne GmbH u. Co. KG, 49196 Bad Laer (DE)
(72) Erfinder: Strautmann, Wolfgang, 49196 Bad Laer (DE)
(74) Vertreter: Dr. Träger & Strautmann PAe PartG mbB

(57) **Zusammenfassung**

Die Erfindung betrifft ein aus einem elastischen Material hergestelltes Zinkensegment (10; 11; 12; 13; 14; 15; 16; 17; 18; 19, 20) für eine Aufnahmevorrichtung (100) an einer Erntemaschine. Die Erfindung betrifft weiterhin eine Aufnahmevorrichtung (100) für eine Erntemaschine und eine Erntemaschine selbst.

Um bei einem aus einem elastischen Material hergestellten Zinkensegment (10; 11; 12; 13; 14; 15; 16; 17; 18; 19, 20) den Materialeinsatz zu reduzieren und/oder die Elastizität des Förderzinkens in vordefinierten Bereichen zu verbessern, wird vorgeschlagen, dass der Sockel (21) und/oder der Förderzinken (23) des Zinkensegments (10; 11; 12; 13; 14; 15; 16; 17; 18; 19, 20) wenigstens einen Innenraum (28) aufweist.

## Beschreibung

Die Erfindung betrifft ein aus einem elastischen Material hergestelltes Zinkensegment für eine Aufnahmevorrichtung an einer Erntemaschine oder einer Heuwerbemaschine. Bei der Erntemaschine kann es sich beispielsweise um einen Ladewagen, eine Ballenpresse oder einen Feldhäcksler handeln. Bei den Heuwerbemaschinen kommen beispielsweise Schwadleger (Merger) in Betracht. Die Erfindung betrifft weiterhin eine Aufnahmevorrichtung für eine Erntemaschine und eine Erntemaschine selbst.

Bekannte Förderzinken an Aufnahmevorrichtungen sind häufig aus hochwertigem Federdraht als Doppel-Förderzinken hergestellt. So zeigt DE 20 2011 002 316 U1 einen Gutaufnehmer mit Zinken 14, die einen geraden Teil 14a und einen spiralförmigen Teil 14b aufweisen. Der Federdraht ist im mittleren Bereich in Form einer Windungsspirale ausgeführt, aus welcher die Enden des Federdrahtes linear hervortreten und so die Zinkenschenkel ausbilden. Konstruktionsbedingt hängt die Funktionsweise dieser Zinken vom Zusammenwirken der Federwirkung des spiralförmigen Teils mit der Federwirkung des geraden Teils, also der Zinkenschenkel, ab.

Die bekannten Einzel- und Doppel-Förderzinken haben im Einsatz die Eigenschaft, nach dem Ausweichen der Schenkel unter Belastung oder bei Bodenberührung teils schlagartig zurückzuschnellen. Hierdurch werden Lastspitzen verursacht, die zu Schäden im Befestigungsbereich oder an den Zinken selbst führen können. Weiterhin verringern die durch die schlagartige Entlastung bewirkten Vibrationen die Lebensdauer der Förderzinken. Darüber hinaus zeigen die bekannten Doppel-Förderzinken aus Federdraht bei Bodenberührung ein relativ aggressives Verhalten und können beispielsweise eine unter dem aufzunehmenden Erntegut befindliche Grasnarbe durch Aufreißen beschädigen.

Weiterhin ist nachteilig, dass die Federkraft im Wesentlichen in der Spirale gespeichert wird und nicht im eigentlichen Zinken. Gegenüber der Spirale ist der Schenkel des Zinkens - je nach Qualität des verwendeten Materials - eher weniger biegsam, so dass bei Auftreffen des Schenkels oder der Spitze des Schenkels auf einen auf dem Boden liegenden Fremdkörper (z.B. einen Stein) die Spirale des Doppel-Förderzinkens gespannt wird. Der eigentliche Schenkel des Doppel-Förderzinkens bleibt dagegen eher in einem geraden Zustand.

Wenn bei Fremdkörperkontakt die Spirale so stark gespannt ist, dass die gespeicherte Kraft größer ist als die zum Bewegen des Gegenstandes notwenige Kraft, schnellt der Zinken nach vorne und bewegt den Gegenstand, der bisher blockiert hat, ruckartig. So können beispielsweise Steine oder sonstige Fremdkörper aus dem Boden gerissen und in die Umgebung oder den Futterschwad katapultiert werden. Diese Steine können beim Auftreffen direkte Beschädigungen, beispielsweise an einem ziehenden Traktor, bewirken. Darüber hinaus können sie in den Schwad bzw. den Strom des aufzunehmenden Ernteguts geschleudert werden und sich dort verfangen. Die Fremdkörper gelangen dann zu den nachgelagerten Arbeitswerkzeugen der Erntemaschine und können diese beschädigen und/oder bleiben im Futter bzw. Fördergut und können so die Gesundheit von Tieren gefährden, die das Futter zu einem späteren Zeitpunkt fressen sollen.

Eine aus DE 100 21 748 A1 bekannte Gutaufnahmeeinrichtung zeigt eine Aufnahmevorrichtung, bei welcher die Förderzinken aus einzelnen Fingern bestehen, die in mehreren linear am Umfang versetzten Reihen aus der Trommel hervortreten. Die Abstreifarbeit des Ernteguts von den Fingern wird von einem rotierenden Zwischenförderer ausgeführt. Die Förderzinken können aus Gummi oder einem anderen federnden Material bestehen und somit eine bodenschonende Eigenschaft aufweisen. Sie weisen jedoch eine schlechtere Fördereigenschaft als die bekannten Doppel-Förderzinken aus Stahldraht auf. Außerdem kann sich Erntegut im Bereich der Zinkenfüße bzw. des Trommelmantels ansammeln, da der dargestellte Zwischenförderer lediglich im Außenbereich der Förderzinken eine kammartige Wirkung hat und seine Förderelemente nicht an den Trommelmantel heranreichen. Darüber hinaus sind die Finger als nicht austauschbar dargestellt und benötigen eine erhebliche Menge an relativ teurem Kunststoff- oder Gummimaterial.

Aus DE 10 2016 115 396 A1 ist ein aus einem elastischen Material hergestelltes Zinkensegment bekannt, das einen Sockel und wenigstens einen aus dem Sockel hervortretenden Förderzinken umfasst. Der Förderzinken kann eine sich vom Sockel zur Zinkenspitze hin verjüngende Kontur aufweisen. Somit ist im Bereich des Zinkenfußes eine größere Kraft erforderlich, um den Einzelzinken zu biegen, als im Bereich der Zinkenspitze. Zwar verbessert sich durch die konische Kontur im Arbeitseinsatz die Bodenanpassung und die Erntegutaufnahme in gewissem Umfang, jedoch kann sich bei schwierigen Erntebedingungen der Verschleiß erhöhen oder die Stabilität der Zinken als nicht ausreichend erweisen. Zudem sind auch diese Zinken relativ teuer, da relativ viel Kunststoffmaterial zu ihrer Herstellung erforderlich ist.

Aus DE 1 158 307 A ist eine Aufnehmerwalze für am Boden liegendes Erntegut bekannt. Die Aufnehmerwalze weist Zinken aus einem elastischen Werkstoff auf. Die Zinken bestehen aus mehreren biegsamen Stäben, die über den größeren Teil ihrer Länge mit einer harten Ummantelung versehen und in eine Hülse eingesteckt sind. Mittels der Hülse und eines Verankerungsringes sind die Zinken an der Aufnehmerwalze befestigt.

US 6199 357 B1 betrifft einen Pick-up-Zinken für eine Erntemaschine, bei der es sich beispielweise um einen Mähdrescher handeln kann. Der Zinken ist zweigeteilt und umfasst einen Befestigungsabschnitt und einen Fingerabschnitt. Der Fingerabschnitt ist abnehmbar auf dem Befestigungsabschnitt angebracht. Der Fingerabschnitt besteht aus einem elastischen Material und weist an seiner Außenkontur eine Profilierung auf.

US 4 901 511 A betrifft eine Haspel für eine Erntemaschine wie einen Mähdrescher. Auf der Haspel sind Zinken angebracht die eine gebogene Form und eine spezielle Profilierung aufweisen. Durch die gekrümmte Form und die Profilierung sollen die Elastizitätseigenschaften verbessert werden.

Aus US 3 785 132 A ist eine Aufnahmeeinheit bekannt, die an einem Mähdrescher montiert ist und von diesem vor der Zuführhaspel des Mähdreschers gedreht wird, um das Getreide anzuheben und zu positionieren. Die Aufnahmeeinheit besteht aus einem Zylinder mit einer Anzahl flexibler Zinken, die von dessen Außenwand vorstehen. Die Zinken weist in ihrem Endbereich eine Anzahl nutartiger Rillen auf. Im Arbeitseinsatz sollen die nutartigen Rillen eine Führung für das vom Boden aufzuhebende Getreide bilden.

Die vorliegende Erfindung hat sich die Aufgabe gestellt, einen Förderzinken zu schaffen, der kostengünstig in der Herstellung ist und dessen Formgebung eine verbesserte Bodenanpassung ermöglicht.

Die erfindungsgemäße Aufgabe wird gelöst durch ein Zinkensegment mit den Merkmalen des Anspruchs 1 und durch eine Aufnahmevorrichtung, an der solche Zinkensegmente angebracht sind.

### Definitionen:

Unter einem Förderzinken wird ein fingerartiges Teil verstanden, dass im Außenbereich einer Pick-up-Trommel angebracht ist und den Trommelmantel überragt. Eine Vielzahlt von auf der Trommel angebrachten Förderzinken dient dazu, im Ernteeinsatz bei rotierender Pick-up-Trommel Erntegut vom Boden aufzunehmen und zu fördern.

Unter einem Zinkensegment wird ein montagefertiges Bauteil verstanden, dass auf oder an der Pick-up-Trommel anbringbar ist. Ein Zinkensegment umfasst in jedem Fall wenigstens einen Förderzinken, kann aber auch zwei oder mehr Förderzinken umfassen. Ein Zinkensegment kann weiterhin einen an den Förderzinken anschließenden Sockel umfassen, der zur Befestigung des Zinkensegmentes auf oder an der Pick-up-Trommel dient. Ein Zinkensegment muss jedoch nicht zwangsläufig einen Sockel umfassen. Bei einem Zinkensegment ohne Sockel kann vielmehr ein unterer Bereich des Förderzinkens, der auch als Fußbereich bezeichnet werden kann, zur Befestigung des Zinkensegments auf oder an der Pick-up-Trommel dienen.

Die erfindungsgemäßen Zinkensegmente sind universell an verschiedenen Ausführungsformen von Aufnahmevorrichtungen, die auch als Pick-ups bezeichnet werden, einsetzbar. Solche Pick-ups sind allgemein bekannt. Sie können gesteuert oder ungesteuert sein. Sie können eine aus mehreren Zinkenträgerrohren gebildete Trommel aufweisen oder eine rohrartige Trommel, auf die die Förderzinken direkt montiert sind, beispielsweise in zur Aufnahme der Zinkensegmente vorgesehene Aufnahmetaschen. Weiterhin kann vorgesehen sein, dass auf einer rohrartigen Trommel Zinkenringe angeordnet sind, die wiederum die Zinkensegmente tragen.

Allen Aufnahmevorrichtungen gemeinsam ist, dass sie um eine Drehachse rotieren und die Zinkensegmente auf einer äußeren Umfangskontur nach außen weisend angeordnet sind, so dass die sich drehende Aufnahmevorrichtung Erntegut vom Boden anheben und weiterfördern können. Übliche Aufnahmevorrichtungen weisen ca. 30 bis 45 Zinkenringe mit in der Regel fünf oder sechs Zinkensegmenten auf. Somit hat eine Aufnahmevorrichtung mit vierzig Zinkenringen und jeweils sechs Zinkensegmenten pro Zinkenring insgesamt 240 Zinkensegmente.

Das Zinkensegment ist aus einem elastischen Material hergestellt ist und umfasst in der Regel einen Sockel und einen daraus hervortretenden Förderzinken mit einem Endbereich und einer Zinkenspitze. Erfindungsgemäß weist der der Sockel und/oder der Förderzinken des Zinkensegments wenigstens einen Innenraum auf.

Da die Herstellkosen eines Zinkensegmentes stark von der Menge des eingesetzten Kunststoffmaterials abhängig sind, reduzieren sich die Kosten eines einzelnen Förderzinkens signifikant, wenn Herstellmaterial eingespart werden kann. Hinzu kommt, dass sich die Menge des Kunststoffmaterials nicht proportional zu seiner Festigkeit verhält: Bei einem Zinken mit einem Innenraum und einem hierdurch beispielsweise um 30% reduzierten Gewicht gegenüber einem äußerlich gleich großen Zinken ohne Innenraum reduziert sich die Festigkeit nicht um 30%, sondern bei geschickter räumlicher Anordnung des Innenraums deutlich geringfügiger. Vereinfacht gesagt, ist es also möglich, den Materialeinsatz beispielsweise um 30% zu reduzieren und dabei nur einen relativ geringfügigen Festigkeitsverlust, beispielsweise 10% in Kauf nehmen zu müssen. Dieser Vorteil der Materialersparnis wirkt sich bei Zinken mit einem nach außen geschlossenen Innenraum, also einem inneren Hohlraum, besonders stark aus.

Ein weiterer Vorteil eines Zinkens mit Innenraum liegt darin, dass durch einen solchen Innenraum auch die Elastizität des Förderzinkens variierbar ist. In Bereichen, die relativ fest und starr sein sollen, kann der Innenraum klein oder gar nicht vorgesehen sein, in Bereichen, die elastisch sein sollen, kann er dagegen groß sein. Die Elastizität des Förderzinkens kann somit an die Anforderungen angepasst werden, die im jeweiligen Bereich des Förderzinkens vorliegen.

Der Förderzinken kann hinsichtlich seines Querschnitts rund, prismatisch, teilprismatisch, walzen- oder teilwalzenförmig geformt sein. Vorzugsweise hat der Förderzinken die Form eines sich in Richtung Spitze verjüngenden, abgestumpften Obelisken, dessen zwei sich gegenüberliegende Seitenflächen plan und zueinander parallel sind. Der Förderzinken kann radial oder geneigt, vorzugsweise nachlaufend geneigt, gegenüber dem Sockel ausgerichtet sein.

Bei dem elastischen Material kann es sich beispielsweise um einen Kunststoff aus Polyurethan (PUR) handeln. Aber auch andere Kunststoffe oder Naturgummi sind, soweit sie elastisch sind, grundsätzlich zur Herstellung der Zinkensegmente geeignet. Bei einem konisch ausgebildeten Zinkensegment ist im Bereich des Zinkenfußes eine größere Kraft notwendig, um den einzelnen Förderzinken zu biegen als im Bereich der Zinkenspitze. Der Förderzinken ist somit an seinem äußeren (dem Ladegut zugewandten) Ende elastischer als im Bereich des Sockels.

Das erfindungsgemäße Zinkensegment umfasst im Gegensatz zu den als Stand der Technik genannten Förderzinken und Zinkensegmenten in seinem Inneren wenigstens einen Innenraum. Dieser Innenraum kann insgesamt nach außen hin geschlossen sein und beispielsweise mit 3D-Kunstsoff-Drucktechnik hergestellt sein. Bei Nutzung eines 3D-Druckverfahrens können beliebig viele und beliebig geformte Innenräume im Zinkensegment vorgesehen sein. Hierdurch können im Zinkensegment anforderungsgerechte und an den jeweiligen Zinkensegmentbereich angepasste unterschiedliche Festigkeits- und Elastizitätsanforderungen realisiert werden.

Der Innenraum kann aber auch nach außen offen sein beispielsweise einen zu einer Seite hin offen U-förmige oder V-förmigen Schlitz aufweisen. Ein solcher schlitzartiger Innenraum erhöht einerseits die Elastizität und spart andererseits Kunststoffmaterial ein. Analog zu einem U-förmig oder V-förmig geformten Innenraum kann der Förderzinken auch eine U-förmige oder V-förmige Außenkontur aufweisen. Vorzugsweise ist die Öffnung des U-förmigen oder V-förmigen Innenraums im montierten Zustand an der in Rotationsrichtung gesehen rückseitigen Seite des Förderzinkens angeordnet.

Das Zinkensegment kann auch einen Innenraum mit einer Öffnung aufweisen, die vorzugsweise an der Unterseite, also an der im montierten Zustand zur Oberfläche der Pick-up-Trommel ausgerichteten Seite, angebracht ist. In einem solchen Fall ist zum einen die im Ernteeinsatz mit dem Erntegut in Kontakt kommende Oberfläche des Förderzinkens geschlossen, so dass weder durch den Förderzinken noch durch die Öffnung an der Unterseite Erntegutpartikel oder Staub in den Innenraum des Zinkensegments eindringen können. Zum anderen erleichtert sich die Fertigung im Kunststoff-Gussverfahren.

In einer bevorzugten Ausführungsform weist der Innenraum eine Kontur auf, die an die Außenkontur des Förderzinkens angepasst ist, so dass der Förderzinken eine Wandung mit einer konstante Wandungsdicke aufweist. Der Förderzinken ist dann in alle Richtungen gleich stark belastbar.

Alternativ dazu kann aber auch vorgesehene sein, dass die Wandung eine Vorderwandung, eine Rückwandung und zwei Seitenwandungen umfasst und die Vorderwandung und / oder die Rückwandung dicker ist, als die Seitenwandung. Ein solcher Förderzinken weist in Rotationsrichtung einen höheren Knickwiderstand auf als zu seiner linken oder rechten Seite hin. Durch die dickere Vorder- und oder Rückwandung können einerseits die in Rotationsrichtung auftretenden Belastungen, die in der Regel höher sind als die Seitenkräfte, kompensiert werden, andererseits kann durch die im Vergleich zur Vorder- und/oder Rückwandung dünnere Seitenwandung Herstellmaterial (Kunststoff) eingespart und Herstellkosten reduziert werden.

In einer weiteren Ausführung kann der Sockel und/oder der Förderzinken des Zinkensegments wenigstens zwei Innenräume aufweisen. Beispielsweise kann vorgesehen sein, dass ein Innenraum sich im montierten Zustand in Rotationsrichtung gesehen im vorderen Bereich des Zinkensegments befindet und ein weiterer Innenraum im hinteren Bereich, so dass zwischen den beiden Innenräumen eine Art Steg ausgebildet ist.

Der Innenraum des Zinkensegments kann im montagefertigen Zustand hohl sein. Es kann aber auch vorgesehen sein, dass wenigstens ein Innenraum zumindest bereichsweise mit einem Füllmaterial ausgefüllt ist. Durch Einbringung des Füllmaterials ergibt sich ein Hybridzinken, dessen Außenmaterial aus elastischem Kunststoff besteht und dessen Innenmaterial grundsätzlich frei wählbar ist. So kann als Innenmaterial beispielsweise ein zweiter Kunstsoff mit anderen Festigkeits- und/oder Elastizitätseigenschaften und/oder Kosteneigenschaften eingebracht werden. Beispielsweise kann der Innenraum mit einem kostengünstigen Füllmaterial ausgefüllt werden um einerseits die Kostenvorteile des reduzierten Materialbedarfs zu nutzen und andererseits die Gefahr zu reduzieren, dass der Förderzinken bei Überschreiten seiner Belastungs- beziehungsweise Elastizitätsgrenze schlagartig abknickt.

Weiterhin kann der Innenraum auch zur Aufnahme eines Stahlstiftes dienen. Hierzu kann im Bereich der Zinkenspitze eine vom Innenraum ausgehende Bohrung vorgesehen sein. In die Bohrung kann ein über die Zinkenspitze hinausragender Stift angeordnet sein. Der Stift kann aus einem harten Kunststoff oder Stahl, beispielsweise einem Federstahl, hergestellt sein. Die aus der Zinkenspitze herausragende Spitze des Stiftes bildet einen Verschleißschutz für die Zinkenspitze. Der Stift kann ähnlich wie ein Nagel ausgebildet sein und einen Kopf aufweisen der größer ist als die genannte Bohrung. Ein von innen durch den Hohlraum in die Bohrung eingesteckter Stift kann so nicht aus dem Förderzinken herausfallen. Der Stift kann aber auch anders gegen Herausfallen gesichert sein, beispielsweise in die Bohrung bzw. in den Endbereich des Förderzinkens eingeklebt, eingegossen oder eingepresst sein.

In weiteren Ausführungsformen kann der Förderzinken wenigstens einen Schlitz aufweisen. Vorzugsweise wird ein solcher Schlitz in den Endbereich des Förderzinkens eingebracht.

Bei einem nicht aus Stahldraht, sondern aus einem elastischen Material, gefertigten Förderzinken ist die Biegefähigkeit beim Bodenkontakt im Ernteeinsatz oder beim Auftreffen auf Fremdkörper im Bereich der Zinkenspitze höher als im Bereich des Zinkenfußes. Dies entspricht auch den Bedürfnissen beziehungsweise dem an die Förderzinken gestellten Anforderungsprofil.

Ein zusätzlicher in den Bereich der Zinkenspitze eingebrachter Schlitz dient zur weiteren Optimierung der Biegefähigkeit der Förderzinken.

Der oder die Schlitze können in unterschiedlichen Ausführungen vorgesehen sein.

Der Schlitz kann in einer Ebene angeordnet sein, die parallel zu einer für den Arbeitseinsatz vorgesehenen Rotationsrichtung des Förderzinkens ausgerichtet ist. Der Schlitz spaltet die Zinkenspitze somit in zwei Ausläufer auf, die parallel zur Rotationsrichtung des Förderzinkens ausgerichtet sind. Durch die Aufspaltung in Rotationsrichtung können die beiden Ausläufer im Arbeitseinsatz in Fahrtrichtung gesehen bei Fremdkörperkontakt einzeln nach links oder rechts ausweichen.

Alternativ dazu kann der Schlitz in einer Ebene angeordnet sein, die senkrecht zur für den Arbeitseinsatz vorgesehenen Rotationsrichtung des Förderzinkens ausgerichtet ist. Der Schlitz spaltet die Zinkenspitze somit in zwei Ausläufer auf, die in Querrichtung des Förderzinkens ausgerichtet sind. Durch den Querspalt erhöht sich einerseits die Flexibilität der beiden Ausläufer gegenüber einer ungeschlitzten Zinkenspitze, andererseits kann im Arbeitseinsatz der in Fahrt- und Rotationsrichtung gesehen hintere Ausläufer einen sich bei Fremdkörperkontakt umbiegenden vorderen Ausläufer abstützen.

Der Schlitz kann in Richtung Zinkenspitze offen sein und somit den Förderzinken in dessen Endbereich in wenigstens zwei Ausläufer unterteilen.

Alternativ zu einer offenen Kontur kann der Schlitz in Richtung Zinkenspitze geschlossen sein und den Förderzinken in dessen Endbereich tunnelartig durchdringen. Hierdurch wird zum einen die gewünschte zusätzliche Elastizität erreicht, zum anderen verhindert die geschlossene Zinkenspitze, dass sich Material zwischen die Ausläufer setzt und den Förderzinken dauerhaft aufgabelt.

Alternativ zur Einbringung eines Schlitzes können auch zwei oder mehr Schlitze vorgesehen sein, welche parallel und/oder senkrecht zueinander ausgerichtet sind. Hierdurch wird die borstenartige Aufsplittung der Zinkenspitze weiter erhöht und die Biegesteifigkeit der einzelnen Ausläufer reduziert, so dass die einzelnen Ausläufer sich widerstandsärmer an die Bodenkontur anpassen oder Fremdkörpern ausweichen können.

Hinsichtlich der Auslegung des einen oder der mehreren im Zinkensegment vorgesehenen Schlitze(s) sind eine Vielzahl von Varianten möglich, die teilweise auch miteinander kombinierbar sind. Die Auswahl eines für den jeweiligen Einsatzzweck optimalen Zinkensegments ist somit an das individuelle Anforderungsprofil der Aufnahmevorrichtung beziehungsweise der Erntemaschine insgesamt anpassbar.

In einer weiteren Ausführungsform kann das Zinkensegment einen Förderzinken mit wenigstens einer an seiner Außenkontur vorgesehenen Verstärkungsrippe aufweisen. Vorzugsweise ist die wenigstens eine Verstärkungsrippe so angeordnet, dass sie sich bei im Arbeitseinsatz befindlicher Aufnahmevorrichtung in Rotationsrichtung gesehen hinter dem Förderzinken befindet. Hierdurch wird der Förderzinken von hinten abgestützt und das Risiko, dass ein Förderzinken im Arbeitseinsatz bei Überlastung nach hinten abknickt reduziert. Alternativ oder ergänzend kann aber auch wenigstens eine in Rotationsrichtung gesehen seitlich vom Förderzinken angeordnete Verstärkungsrippe vorgesehen sein, um den Förderzinken zur Seite hin abzustützen und ein seitliches Ausbiegen zu erschweren.

An der Außenseite des Zinkensegments, vorzugsweise an der in Rotationsrichtung gesehen hinteren Seite, kann der Förderzinken oder eine am Förderzinken vorgesehen Verstärkungsrippe eine Außenkontur mit einem wellenförmigen Profil aufweisen. Die wellenförmige Kontur versteift den Förderzinken einerseits und reduziert damit die Knickgefahr, andererseits bleibt die gewünschte Elastizität des Förderzinkens zumindest weitgehend erhalten.

Die erfindungsgemäße Aufgabe wird weiterhin gelöst durch eine Aufnahmevorrichtung für Erntemaschinen auf welcher Zinkensegmente mit wenigstens einem in den Förderzinken eingebrachten Innenraum angebracht sind.

Zudem betrifft die Erfindung auch eine Erntemaschine für Halm- und Blattgut, welche mit der beschriebenen Aufnahmevorrichtung, beziehungsweise mit den beschriebenen Zinkensegmenten, ausgestattete ist.

Weitere, die Erfindung verbessernde Maßnahmen werden nachstehend mit der Beschreibung von bevorzugten Ausführungsbeispielen der Erfindung anhand der Figuren näher dargestellt.
- Fig. 1: zeigt eine Erntemaschine in Gestalt eines Ladewagens mit einer Aufnahmevorrichtung in einer schematischen Seitenansicht;
- Fig. 2: zeigt die Aufnahmevorrichtung aus Fig. 1 in einer perspektivischen Ansicht;
- Fig. 3: zeigt ein Zinkensegment in einer perspektivischen Ansicht;
- Fig. 4: zeigt das Zinkensegment gemäß Fig. 3 in einer geschnittenen Darstellung mit sichtbarem Innenraum;
- Fig. 5: zeigt ein Zinkensegment mit einem V-förmig geschlitzten Innenraum in einer Seitenansicht;
- Fig. 6: zeigt das Zinkensegment gemäß Fig. 5 in einer ersten perspektivischen Ansicht;
- Fig. 7: zeigt das Zinkensegment gemäß Fig. 5 in einer zweiten perspektivischen Ansicht;
- Fig. 8: zeigt das Zinkensegment gemäß Fig. 5 in einer Schnittdarstellung;
- Fig. 9: zeigt ein Zinkensegment mit einem Innenraum in einer geschnittenen Darstellung;
- Fig. 10: zeigt ein Zinkensegment mit einem Innenraum und einem Schlitz im Endbereich des Förderzinkens in einer geschnittenen Darstellung;
- Fig. 11: zeigt ein Zinkensegment mit zwei Innenräumen in einer geschnittenen Darstellung;
- Fig. 12: zeigt ein Zinkensegment mit zwei Innenräumen und einem Schlitz im Endbereich des Förderzinkens in einer geschnittenen Darstellung;
- Fig. 13: zeigt ein Zinkensegment mit einem Innenraum und einer profilierten Außenkontur in einer geschnittenen Darstellung;
- Fig. 14: zeigt ein Zinkensegment mit einem Innenraum, einem Schlitz im Endbereich des Förderzinkens und einer profilierten Außenkontur in einer geschnittenen Darstellung;
- Fig. 15: zeigt ein Zinkensegment mit einem Innenraum und einem in die Zinkenspitze eingebrachten Stift in einer geschnittenen Darstellung;
- Fig. 16a: zeigt ein Zinkensegment mit einem zur Zinkenspitze hin offenen Längsschlitz in einer perspektivischen Ansicht;
- Fig. 16b: zeigt das Zinkensegment gemäß Fig. 12a in einer geschnittenen Darstellung;
- Fig. 17a: zeigt ein Zinkensegment mit einem zur Zinkenspitze hin offenen Querschlitz in einer perspektivischen Ansicht;
- Fig. 17b: zeigt das Zinkensegment gemäß Fig. 13a in einer geschnittenen Darstellung;
- Fig. 18a: zeigt ein Zinkensegment mit einem zur Zinkenspitze hin geschlossenen Längsschlitz in einer perspektivischen Ansicht;
- Fig. 18b: zeigt das Zinkensegment gemäß Fig. 18a in einer geschnittenen Darstellung;
- Fig. 19a: zeigt ein Zinkensegment mit einem zur Zinkenspitze hin geschlossenen Querschlitz in einer perspektivischen Ansicht;
- Fig. 19b: zeigt das Zinkensegment gemäß Fig. 19a in einer geschnittenen Darstellung;
- Fig. 20: zeigt ein Zinkensegment mit zwei zur Zinkenspitze hin offenen Längsschlitzen in einer perspektivischen Ansicht;
- Fig. 21: zeigt ein Zinkensegment mit zwei zur Zinkenspitze hin offenen Querschlitzen in einer perspektivischen Ansicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe wie: "obere", "oben", "untere", "linke" oder "rechte" beziehen sich auf die in der Zeichnung dargestellte Anordnung der Komponenten.

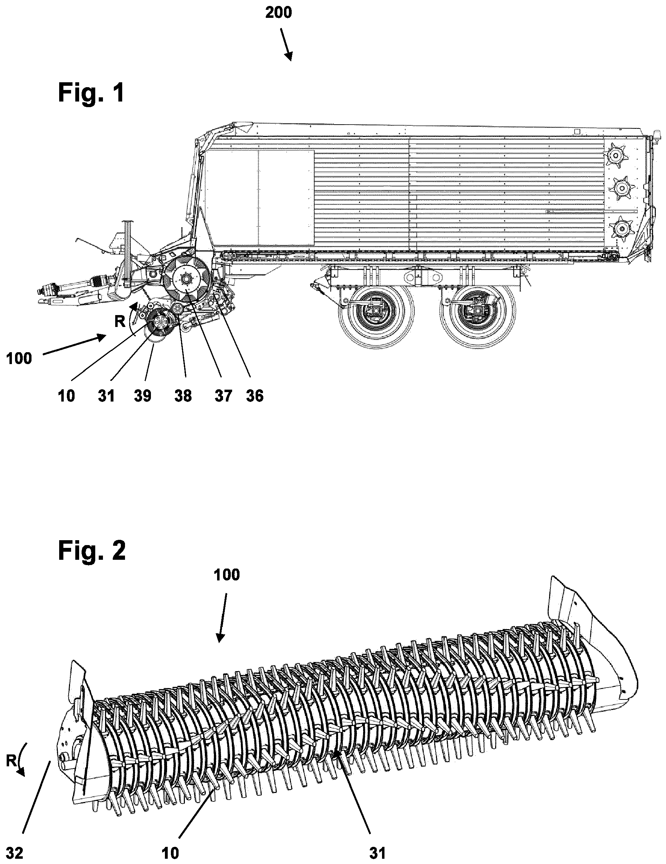

Figur 1 zeigt eine landwirtschaftliche Erntemaschine 200 in Form eines Ladewagens. Der im Ausführungsbeispiel dargestellte Ladewagen umfasst eine Aufnahmevorrichtung 100 (vgl. Fig. 2) mit einer walzenförmigen Trommel 31 und darauf angebrachten Zinkensegmenten 10. Die Trommel 31 ist auf einer Antriebswelle 32 gelagert. Die Trommel 31 und die darauf angebrachten Zinkensegmente 10 rotieren im Arbeitseinsatz um die Antriebswelle 32 in eine Rotationsrichtung R.

Weiterhin umfasst der Ladewagen eine Schneidvorrichtung 36, ein Fahrwerk und einen oberhalb des Fahrwerks angeordneten Laderaum. Ferner ist mit Bezugszahl 38 eine an sich bekannte Zuführwalze dargestellt, die Bestandteil eines den Transport des Ernteguts unterstützenden Continous-Flow-Systems ist. Das Continous-Flow-Systems wird auch als CFS-Ladeaggregat bezeichnet. Der Ladewagen stützt sich im von einer Zugmaschine abgekoppelten Zustand auf einem ausfahrbaren Stützrad 39 ab.

Figur 2 zeigt die Aufnahmevorrichtung 100 des in Figur 1 dargestellten Ladewagens. Auf der Trommel 31 sind im dargestellten Ausführungsbeispiel eine Vielzahl von Zinkensegmenten 10 angebracht. Die Zinkensegmente 10 sind hier beispielhaft dargestellt. An Stelle der Zinkensegmente 10 sind auch die Zinkensegmente 11, 12, 13, 14, 15, 16, 17, 18, 19, 20 oder andere elastische Zinkensegmente mit wenigstens einem Innenraum einsetzbar. Die Zinkensegmente 10 weisen Förderzinken 23 auf, die bei rotierender Trommel 31 im Arbeitseinsatz Erntegut vom Boden aufheben und weiterfördern. Das vom Förderzinken 23 im Ernteeinsatz aufgenommene Erntegut wird mit Unterstützung durch das CFS-Ladeaggregat zum Förderrotor 37 gefördert, mittels der Schneidvorrichtung 36 geschnitten und gelangt schließlich in einen am Ladewagen vorgesehenen Laderaum.

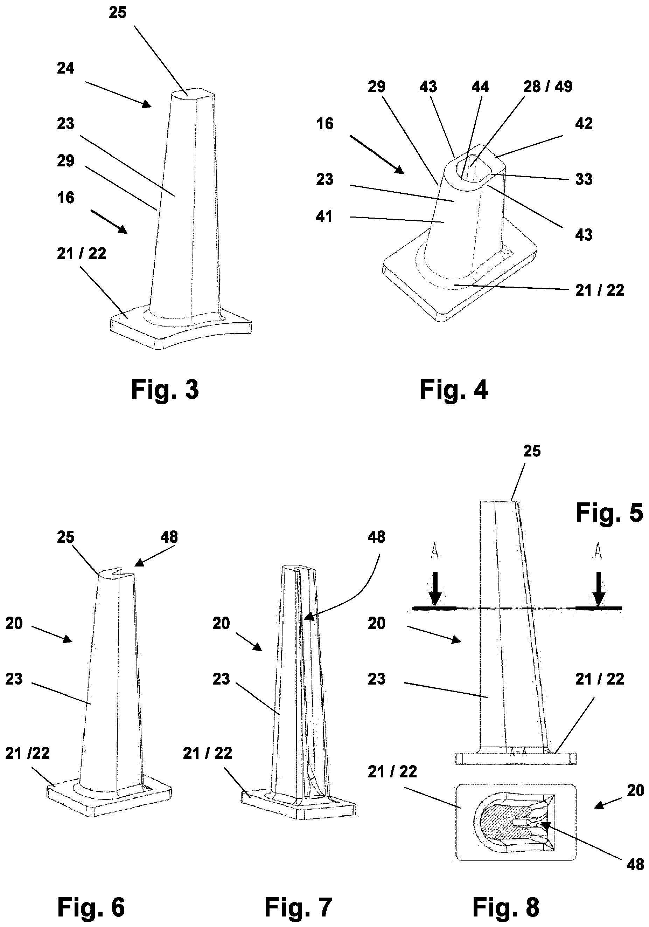

Die in den Figuren 3 bis 21 dargestellten Zinkensegmente 10, 11, 12, 13, 14, 15, 16, 17, 18, 19 und 20 haben im Wesentlichen einen sehr ähnlichen Aufbau. Dieser grundsätzliche Aufbau eines Zinkensegmentes wird zunächst in einer auf alle erfindungsgemäßen Zinkensegmente bezogenen Beschreibung erläutert.

Alle erfindungsgemäßen Zinkensegmente umfassen einen Förderzinken 23. In der Regel umfassen sie zudem einen Sockel 21 aus dem der wenigstens eine Förderzinken 23 heraustritt. Der Förderzinken 23 weist einen Endbereich 24 und eine Zinkenspitze 25 auf. Unter einem Sockel wird vereinfacht gesagt der Bereich verstanden, der zur Befestigung des Zinkensegments auf oder an der Aufnahmevorrichtung 100 dient. Insofern kann auch der Fußbereich eines Förderzinkens 23 selbst als Sockel 21 dienen, so dass ein solches Zinkensegment einen in den Förderzinken 23 integrierten Sockel aufweist.

Der Sockel 21 und/oder der Förderzinken 23 selbst, umfasst einen Befestigungsbereich 22, mittels dessen das Zinkensegment 10 insgesamt mit geeigneten Befestigungsmitteln, beispielsweise Schrauben oder Klemmen (nicht dargestellt), auf der in Fig. 2 dargestellten Aufnahmevorrichtung 100 montierbar ist. Der Sockel 21 kann unterschiedliche Konturen aufweisen. So haben beispielsweise die Förderzinken 10 bis 15 einen prismatischen Sockel 21 und die Förderzinken 16 bis 20 einen kragenförmigen Sockel 21.

Die Förderzinken 23 können unterschiedliche Konturen aufweisen, beispielsweise rund, prismatisch, konisch oder andersartig ausgeformt sein. Auch die Neigung zum Sockel 21 und damit indirekt auch in Bezug auf die Rotationsachse der Aufnahmevorrichtung kann variieren. So kann der Förderzinken 23 im montierten Zustand nach vorne geneigt und damit vorlaufend sein. Er kann auch senkrecht zur Rotationsachse ausgerichtet nach hinten geneigt und damit nachlaufend ausgerichtet sein. Weiterhin ist es möglich, dass das Zinkensegment nicht nur einen, sondern mehrere voneinander beabstandete Förderzinken 23 aufweist. Eine Ausführungsform mit zwei Förderzinken 23 bildet einen sogenannten Doppelzinken.

Wesentlich für die Erfindung und allen erfindungsgemäßen Zinkensegmenten 10, 11, 12, 13, 14, 15, 16, 17, 18, 19 und 20 gemeinsam ist, dass der Förderzinken 23 und/oder der Sockel 21 wenigstens einen Innenraum 28 aufweist.

Nachfolgend werden einige unterschiedliche Ausführungsformen beispielhaft beschrieben.

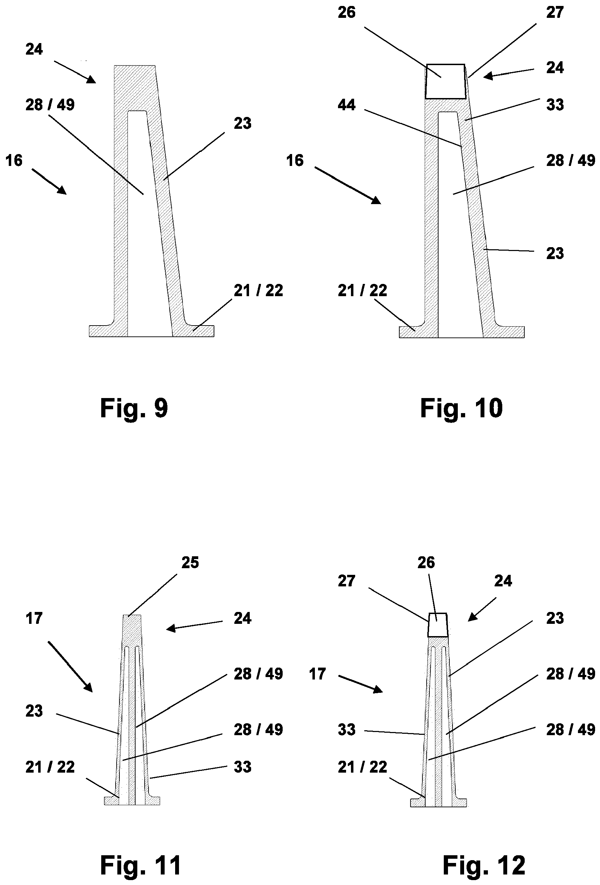

Die Figuren 3,4 und 9 zeigen ein erstes Ausführungsbeispiel, nämlich ein Zinkensegment 16 mit einem kragenförmigen Sockel 21, der einen Befestigungsbereich 22 ausbildet. An den Sockel 21 schließt sich der Förderzinken 23 an, der in der Zinkenspitze 25 ausläuft. Im Inneren von Sockel 21 und Förderzinken 23 befindet sich ein Hohlraum 28, der in der Schnittdarstellung gemäß Figur 4 und 9 zu sehen ist.

Bei dem in den Figuren 3, 4 und 9 gezeigten Ausführungsbeispiel handelt es sich bei dem Hohlraum 28 um einen nach außen geschlossenen Hohlraum 49. Solche nach außen geschlossenen Hohlräume 49 sind auch bei den Ausführungsbeispielen gemäß der Figuren 10 bis 15 vorgesehenen. Ein Hohlraum 28 mit einer nach außen geschlossenen Kontur hat mehrere Vorteile. Unerwünschte Partikel wie Staub und Erntegut-Partikel können nicht in den Hohlraum eindringen und dort möglicherweise festsetzen. Somit werden die Strömungseigenschaften des Zinkensegments nicht durch sich möglicherweise festsetzende und aus einem offenen Hohlraum herausragende Partikel beeinträchtigt. Weiterhin verleiht eine den Hohlraum umgebende geschlossene Kontur einem Zinkensegment eine im Vergleich zu einem offenen Hohlraum erhöhte Biegestabilität, so dass bei gleicher Biegesteifigkeit und Flexibilität ein Zinkensegment mit geschlossenem Hohlraum in der Regel materialsparender gefertigt werden kann, als ein Zinkensegment mit offenem Hohlraum.

Alternativ zu einer geschlossenen Zinkenspitze (vgl. Fig. 9) kann im Endbereich 24 des Förderzinkens ein Schlitz 26 vorgesehen sein (Figur 10).

Die Figuren 5 bis 8 zeigen ein Zinkensegment 20 mit einem Schlitz 26, der im Wesentlichen eine V-förmigen Innenkontur 48 aufweist und einen zu einer Seite hin offenen Innenraum 28 ausbildet. Figur 8 zeigt die Draufsicht auf das Zinkensegment 20 auf Basis der in Figur 5 enthaltenen Schnittlinie A - A.

Die V-förmige Innenkontur 48 reicht ausgehend vom Sockel 21 bis zur Zinkenspitze 25. Der V-förmig geschlitzte Innenraum 28 erhöht Elastizität des Förderzinkens 23 und beeinträchtig die Stabilität des Förderzinkens im Vergleich zu einem Förderzinken aus Vollmaterial nur unwesentlich Alternativ zu einer V-förmigen Kontur sind auch andere Konturen möglich, beispielsweise eine U-förmige Kontur.

Die Figuren 9 und 10 zeigen jeweils ein Zinkensegment 16 mit einem Innenraum 28 in einer Schnittdarstellung. Der Innenraum 28 weist eine Kontur 44, die an die Außenkontur 29 des Förderzinkens 23 angepasst ist. Das Zinkensegment 16 gemäß Figur 9 hat einen Endbereich 24 aus Vollmaterial, das Zinkensegment 16 gemäß Figur 10 hat einen Endbereich 24 mit einem Schlitz 26. Der Schlitz 26 unterteilt analog zu den in den Figuren 10 und 12 dargestellten Ausführungsformen den Endbereich 24 wiederum in zwei Ausläufer 27.

Die Figuren 11 und 12 zeigen jeweils ein Zinkensegment 17 mit zwei Innenräumen 28 in einer Schnittdarstellung. Das Zinkensegment 17 gemäß Figur 11 hat einen Endbereich 24 aus Vollmaterial, das Zinkensegment 17 gemäß Figur 12 hat einen Endbereich 24 mit einem Schlitz 26. Der Schlitz 26 unterteilt den Endbereich 24 in zwei Ausläufer 27.

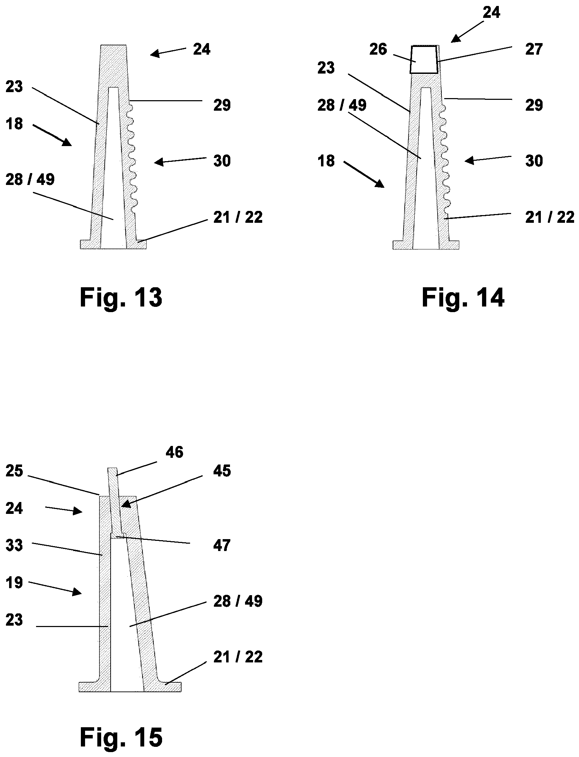

Die in den Figuren 13 und 14 dargestellten Zinkensegmente 18 entsprechen im Wesentlichen den Zinkensegmenten 16. Im Unterschied zu den Zinkensegmenten 16 weisen die Zinkensegmente 18 ein an einer Außenkontur 29 angebrachtes wellenartigem Profil 30 auf. Das Zinkensegment 18 gemäß Figur 13 hat einen Endbereich 24 aus Vollmaterial, das Zinkensegment 18 gemäß Figur 14 hat einen Endbereich 24 mit einem Schlitz 26. Der Schlitz 26 unterteilt analog zu den in den Figuren 10 und 12 dargestellten Ausführungsformen den Endbereich 24 wiederum in zwei Ausläufer 27.

Figur 15 zeigt ein Zinkensegment 19 mit einem Innenraumen 28 und einer in den Endbereich 24 des Förderzinkens 23 eingebrachten Bohrung 45, in die ein Stift 46 eingesetzt ist. Der Stift 46 weist einen Kopf 47 auf, der einen größeren Durchmesser aufweist als die Bohrung 45. Der Stift 46 überragt den Förderzinken 23 im montierten Zustand und ist durch seinen Kopf 47 gegen Herausfallen gesichert. Damit der Stift 46 auch nicht von außen nach innen in den Innenraum 28 gedrückt werden kann, kann er entweder in die Bohrung 45 eingepresst oder eingeklebt sein. Alternativ dazu kann auch mittels eines unterhalb des Kopfes 47 in den Innenraum 28 eingebrachtes Sicherungselements, beispielsweise einer Innenraum-Füllung, das Hereindrücken des Stiftes 46 in den Innenraum verhindert werden.

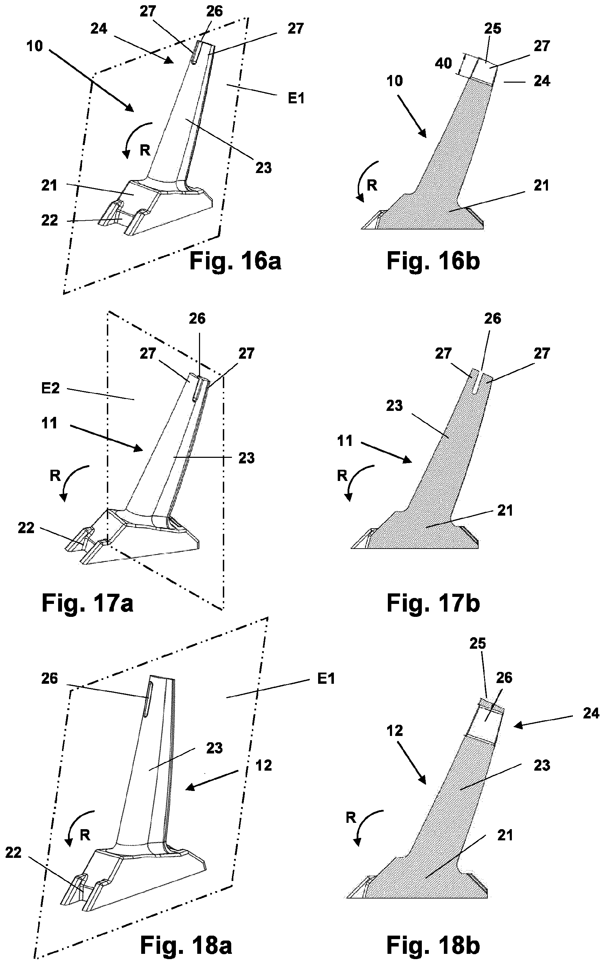

Die Figuren 16 bis 21 zeigen eine alternative Konzeption von Zinkensegmenten 11, 12, 13, 14 und 15. Alle diese Zinkensegmente weisen in ihrem Inneren wenigstens einen Innenraum 28 auf, der in den Figuren 16 bis 21 jedoch in einem nicht sichtbaren Bereich angeordnet ist. Der oder die jeweiligen Innenräume 28 können insbesondere so ausgeführt sein, wie in den Figuren 4 bis 15 dargestellt.

Die Figuren 16 bis 21 veranschaulichen unterschiedliche Arten von Schlitzen, die zusätzlich in ein Zinkensegment eingebracht sein können.

Die Figuren 16a und 16b zeigen ein Ausführungsbeispiel eines Zinkensegments 10 mit einem Schlitz 26, der in einer Ebene E1 des Zinkensegments 10 angeordnet ist, die parallel zur Rotationsrichtung R des Zinkensegments 10 ausgerichtet ist. Der Schlitz 26 unterteilt den Endbereich 24 des Förderzinkens 23 in zwei Ausläufer 27 und hat von der Zinkenspitze 25 aus gesehen eine Tiefe 40 von 20 mm. Der Schlitz 26 kann aber auch länger sein, beispielsweise von der Zinkenspitze 25 in Längsrichtung gesehen bis zur Mitte des Förderzinkens 23 reichen.

Je nach Art eines Boden- oder Fremdkörperkontaktes können die Ausläufer 27 gemeinsam nach rechts oder links ausweichen. Sie können aber auch einzeln, das heißt: der rechte Ausläufer 27 nach rechts und der linke Ausläufer 27 nach links, ausweichen und sich so gabelförmig an einem Hindernis vorbeischieben.

Die Figuren 17a und 17b zeigen ein weiteres Ausführungsbeispiel, nämlich ein Zinkensegment 11 mit einem Schlitz 26, der in einer Ebene E2 des Zinkensegments 11 angeordnet ist, die senkrecht zur Rotationsrichtung R des Zinkensegments 11 ausgerichtet ist. Der Schlitz 26 unterteilt den Endbereich 24 des Förderzinkens 23 analog zur in den Figuren 16a und 16b dargestellten Ausführung wiederum in zwei Ausläufer 27, jedoch sind diese In Rotationsrichtung R gesehen hintereinander angeordnet.

Die Figuren 18a und 18b zeigen ein Ausführungsbeispiel eines Zinkensegments 12 mit einem Schlitz 26, der in einer Ebene E1 angeordnet ist, die parallel zur Rotationsrichtung R des Zinkensegments 12 ausgerichtet ist. Der Schlitz 26 spaltet die Zinkenspitze 25 nicht gabelförmig auf, sondern ist vielmehr nadelöhrartig ausgebildet und zur Zinkenspitze 25 hin geschlossen.

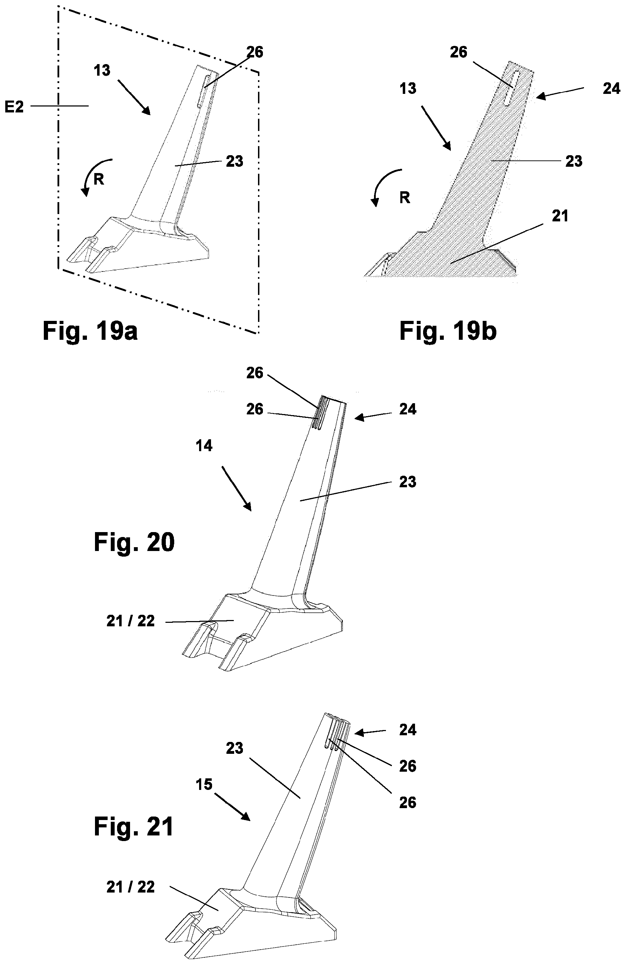

Die Figuren 19a und 19b zeigen ein Ausführungsbeispiel eines Zinkensegment 13 mit einem Schlitz 26, das sich vom vorherigen Ausführungsbeispiel durch die Ausrichtung des nadelöhrartigen Schlitzes unterscheidet. Der Schlitz 26 ist hier in einer Ebene E2 angeordnet, die senkrecht zur Rotationsrichtung R des Zinkensegments 13 ausgerichtet ist.

Unabhängig von seiner Ausrichtung erhöht ein nadelöhrartiger Schlitz 26 die Elastizität und verhindert eine gegebenenfalls unerwünschte gabelartige Aufspaltung, in die sich unter ungünstigen Bedingungen Erntegutpartikel festsetzen können.

Die Figuren 20 und 21 zeigen Zinkensegmente 14 und 15 mit jeweils zwei offenen, im Wesentlichen u-förmigen, Schlitzen 26, die analog zu den obigen Ausführungen in Längsrichtung (Fig. 16) beziehungsweise Querrichtung (Figur 17) ausgerichtet sind. Selbstverständlich können an Stelle mehrere offener Schlitze auch mehrere nadelöhrartig geschlossene Schlitze vorgesehen sein. Auch die kreuzweise Einbringung von offenen oder geschlossenen Schlitzen (in den Figuren nicht dargestellt) ist möglich.

### Bezugszeichenliste

- 10: Zinkensegment (mit offenem Längsschlitz)
- 11: Zinkensegment (mit offenem Querschlitz)
- 12: Zinkensegment (mit geschlossenem Längsschlitz)
- 13: Zinkensegment (mit geschlossenem Querschlitz)
- 14: Zinkensegment (mit zweifach Längsschlitz)
- 15: Zinkensegment (mit zweifach Querschlitz)
- 16: Zinkensegment (mit Längsschlitz und Innenraum)
- 17: Zinkensegment (mit Querschlitz und Innenraum)
- 18: Zinkensegment (mit Querschlitz, Innenraum und Profil)
- 19: Zinkensegment (mit Stift)
- 20: Zinkensegment (mit U-förmig geschlitztem Innenraum)
- 21: Sockel
- 22: Befestigungsbereich
- 23: Förderzinken
- 24: Endbereich (von 23)
- 25: Zinkenspitze
- 26: Schlitz
- 27: Ausläufer
- 28: Innenraum
- 29: Außenkontur (von 23)
- 30: Profil
- 31: Trommel
- 32: Antriebswelle
- 33: Wandung
- 34: -
- 35: -
- 36: Schneidvorrichtung
- 37: Förderrotor
- 38: Zuführwalze
- 39: Stützrad
- 40: Tiefe
- 41: Vorderwandung
- 42: Rückwandung
- 43: Seitenwandung
- 44: Kontur (von 28)
- 45: Bohrung
- 46: Stift
- 47: Kopf (von 46)
- 48: Kontur (V-förmig)
- 49: Hohlraum

- 100: Aufnahmevorrichtung
- 200: Erntemaschine

- A - A: Schnitt
- E1: Ebene
- E2: Ebene
- R: Rotationsrichtung

## Patentansprüche

1. Zinkensegment (10; 11; 12; 13; 14; 15; 16; 17; 18; 19, 20) für eine Aufnahmevorrichtung (100) an Erntemaschinen, wie Ladewagen (200) für Halm- und Blattgut, Ballenpressen oder Heuwerbemaschinen, wobei das Zinkensegment (10; 11; 12; 13; 14; 15; 16; 17; 18; 19, 20) aus einem elastischen Material hergestellt und die Aufnahmevorrichtung (100) zur Aufnahme von auf dem Boden liegendem Erntegut vorgesehen ist und wobei das Zinkensegment (10; 11; 12; 13; 14; 15; 16; 17; 18; 19, 20) wenigstens einen Förderzinken (23) mit einem Endbereich (24) und einer Zinkenspitze (25) umfasst, **dadurch gekennzeichnet, dass** das Zinkensegment (10; 11; 12; 13; 14; 15; 16; 17; 18; 19, 20) wenigstens einen Innenraum (28) aufweist.

2. Zinkensegment (10; 11; 12; 13; 14; 15; 16; 17; 18; 19, 20) nach Anspruch 1, **dadurch gekennzeichnet, dass** der Innenraum (28) des Zinkensegment (10; 11; 12; 13; 14; 15; 16; 17; 18; 19, 20) einen nach außen geschlossenen Hohlraum (49) bildet.

3. Zinkensegment (10; 11; 12; 13; 14; 15; 16; 17; 18; 19, 20) nach Anspruch 1 oder 2, **dadurch gekennzeichnet, dass** das Zinkensegment (10; 11; 12; 13; 14; 15; 16; 17; 18; 19, 20) einen Sockel (21) umfasst, aus dem der wenigstens eine Förderzinken (23) hervortritt und der Innenraum (28) im Sockel (21) und/oder im Förderzinken (23) angeordnet ist.

4. Zinkensegment (10; 11; 12; 13; 14; 15; 16; 17; 18; 19, 20) nach einem der Ansprüche 1 bis 3, **dadurch gekennzeichnet, dass** der Innenraum (28) eine Kontur (44) aufweist, die an eine Außenkontur (29) des Förderzinkens (23) angepasst ist, so dass der Förderzinken (23) eine Wandung (33) mit einer konstante Wandungsdicke aufweist.

5. Zinkensegment (10; 11; 12; 13; 14; 15; 16; 17; 18; 19, 20) nach einem der Ansprüche 1 bis 3, **dadurch gekennzeichnet, dass** die Wandung (33) eine Vorderwandung (41), eine Rückwandung (42) und zwei Seitenwandungen (43) umfasst und die Vorderwandung (41) und / oder die Rückwandung (42) dicker ist, als die Seitenwandung (43), so dass der Förderzinken (23) in Rotationsrichtung (R) einen höheren Knickwiderstand aufweist als zu seiner linken oder rechten Seite hin.

6. Zinkensegment (10; 11; 12; 13; 14; 15; 16; 17; 18; 19, 20) nach Anspruch 1 oder 3, **dadurch gekennzeichnet, dass** der Innenraum (28) eine im Wesentlichen U-förmige oder V-förmige Kontur (48) aufweist, die zu einer Seite hin offen ist.

7. Zinkensegment (10; 11; 12; 13; 14; 15; 16; 17; 18; 19, 20) nach einem der Ansprüche 1 bis 6, **dadurch gekennzeichnet, dass** der Sockel (21) und/oder der Förderzinken (23) des Zinkensegments (10; 11; 12; 13; 14; 15; 16; 17; 18; 19, 20) wenigstens zwei Innenräume (28) aufweisen.

8. Zinkensegment (10; 11; 12; 13; 14; 15; 16; 17; 18; 19, 20) nach einem der Ansprüche 1 bis 7, **dadurch gekennzeichnet, dass** wenigstens ein Innenraum (28) zumindest bereichsweise mit einem Füllmaterial ausgefüllt ist.

9. Zinkensegment (10; 11; 12; 13; 14; 15; 16; 17; 18; 19, 20) nach einem der Ansprüche 1 bis 8, **dadurch gekennzeichnet, dass** im Bereich der Zinkenspitze (25) eine vom Innenraum (28) ausgehende Bohrung (45) vorgesehen ist und in der Bohrung (45) ein über die Zinkenspitze (25) hinausragender Stift (46) angeordnet ist.

10. Zinkensegment (10; 11; 12; 13; 14; 15; 16; 17; 18; 19, 20) nach einem der Ansprüche 1 bis 9, **dadurch gekennzeichnet, dass** der Förderzinken (23) wenigstens einen Schlitz (26) aufweist.

11. Zinkensegment (10; 11; 12; 13; 14; 15; 16; 17; 18; 19, 20) nach Anspruch 10, **dadurch gekennzeichnet, dass** der Schlitz (26) in einer Ebene (E1) angeordnet ist, die parallel oder vertikal zu einer Rotationsrichtung (R) des Förderzinkens (23) ausgerichtet ist.

12. Zinkensegment (10; 11; 12; 13; 14; 15; 16; 17; 18; 19, 20) nach einem der Ansprüche 1 bis 11, **dadurch gekennzeichnet, dass** der Förderzinken (23) eine Außenkontur (29) mit wenigstens einer Verstärkungsrippe aufweist.

13. Zinkensegment (10; 11; 12; 13; 14; 15; 16; 17; 18; 19, 20) nach einem der Ansprüche 1 bis 12, **dadurch gekennzeichnet, dass** der Förderzinken (23) eine Außenkontur (29) umfasst, die mit einem wellenförmigen Profil (30) versehen ist

14. Aufnahmevorrichtung (100) für Erntemaschinen für Halm- und Blattgut oder Heuwerbemaschinen, umfassend Zinkensegmente (10; 11; 12; 13; 14; 15; 16; 17; 18; 19, 20) nach einem der vorhergehenden Ansprüche.

15. Erntemaschine für Halm- und Blattgut oder Heuwerbemaschine, umfassend eine Aufnahmevorrichtung (100) nach Anspruch 14 und/oder Zinkensegmente (10; 11; 12; 13; 14; 15; 16; 17; 18; 19, 20) nach einem der Ansprüche 1 bis 13.
